(19) Europäisches Patentamt
European Patent Office
Office européen des brevets

(11) Veröffentlichungsnummer: **0 283 774 B1**

(12) **EUROPÄISCHE PATENTSCHRIFT**

(45) Veröffentlichungstag der Patentschrift: **06.05.92**

(51) Int. Cl.$^5$: **C07C 307/02**, C08K 5/43, C08L 69/00

(21) Anmeldenummer: **88103120.7**

(22) Anmeldetag: **02.03.88**

(54) **Fluorierte Alkylamidosulfonate, deren Herstellung, deren Verwendung als Flammschutzmittel und sie enthaltende Polycarbonatformmassen.**

(30) Priorität: **14.03.87 DE 3708316**

(43) Veröffentlichungstag der Anmeldung:
**28.09.88 Patentblatt 88/39**

(45) Bekanntmachung des Hinweises auf die Patenterteilung:
**06.05.92 Patentblatt 92/19**

(84) Benannte Vertragsstaaten:
**DE FR GB IT NL**

(56) Entgegenhaltungen:
**DE-A- 2 628 195**
**DE-A- 3 429 048**
**FR-A- 2 301 590**

(73) Patentinhaber: **BAYER AG**

**W-5090 Leverkusen 1 Bayerwerk(DE)**

(72) Erfinder: **Baasner, Bernd, Dr.**
**Hamberger Strasse 27d**
**W-5090 Leverkusen 3(DE)**
Erfinder: **Berg, Klaus, Dr.**
**Hansastrasse 124**
**W-4150 Krefeld(DE)**
Erfinder: **Grigo, Ulrich, Dr.**
**Michelsheide 9**
**W-4152 Kempen 1(DE)**

EP 0 283 774 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue fluorierte Alkylamidosulfonate, ein Verfahren zu deren Herstellung aus den entsprechenden, fluorierten Alkylamidosulfochloriden, deren Verwendung als Flammschutzmittel und diese enthaltende Polycarbonatformmassen.

Von Fluor-Substituenten in den Alkylresten freie Alkylamidosulfonsäurechloride sind bekannt und können aus Aminen durch Umsetzung mit Sulfurylchlorid erhalten werden (siehe Houben-Weyl, Methoden der Organischen Chemie, Bd. XI/2, S. 693 - 695). Werden diese mit wenig Alkali behandelt, so kann man die entsprechenden, von Fluor-Substituenten in den Alkylresten freien Alkylamidosulfonsäuren erhalten. Mit größeren Mengen und/oder höher konzentriertem Alkali wird das entsprechende von Fluor-Substituenten in den Alkylresten freie Alkylamidosulfonsäuresalz allenfalls in Spuren gebildet. Solche Bedingungen führen ganz überwiegend bis ausschließlich zur Spaltung der N-S-Bindung, damit zur Bildung von Alkylammoniumsulfaten und/oder Aminen, Salzsäure, Schwefelsäure und/oder den Salzen der letztgennanten Säuren (siehe Houben-Weyl, a.a.O., S. 682 - 684).

Das Verhalten von Alkylamidosulfonsäuren, die in den Alkylresten keine Fluor-Substituenten enthalten, ist nicht auf Alkylamidosulfochloride mit Fluor-Substituenten in den Alkylresten zu übertragen, da derartige Fluor-Substituenten die Basizität des Stickstoffatoms vermindern und eine noch leichtere Spaltbarkeit der N-S-Bindung durch Alkalien zu erwarten ist. Hinsichtlich ihrer Auswirkung auf die Basizität des Stickstoffatoms sind in diesem Falle am ehesten R-CO-Gruppen mit fluorierten Alkylgruppen zu vergleichen. Werden Alkylamidosulfochloride mit R-CO-Substituenten am Stickstoff mit Alkalien behandelt, so findet ein vollständiger Zerfall des Moleküls unter Spaltung der N-S-Bindung statt (siehe Houben-Weyl, a.a.O., S. 683/684).

Es wurden nun neue fluorierte Alkylamidosulfonate der Formel (I) gefunden,

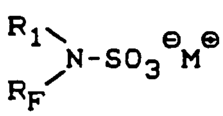

(I),

in der

- $R_1$ für Wasserstoff, Alkyl oder fluoriertes Alkyl,
- $R_F$ für fluoriertes Alkyl und
- $M^{\oplus}$ für ein Äquivalent eines Kations steht.

Sofern es sich bei $R_1$ um Alkyl oder fluoriertes Alkyl handelt, können beispielsweise Alkylreste mit 1 bis 12 C-Atomen vorliegen, die gegebenenfalls mit 1 bis 8 F-Atomen substituiert sein können. Vorzugsweise sind derartige Alkyl- und fluorierte Alkylreste gesättigt, geradkettig oder verzweigt und enthalten 1 bis 6 C-Atome und gegebenenfalls 1 bis 6 F-Atome.

Bei $R_F$ kann es sich beispielsweise um fluorierte Alkylreste mit 1 bis 12 C-Atomen und 1 bis 8 F-Atomen handeln. Vorzugsweise sind derartige fluorierte Alkylreste geradkettige oder verzweigt und enthalten 1 bis 6 C-Atome und 1 bis 6 F-Atome.

Bei $M^{\oplus}$ kann es sich beispielsweise um ein Äquivalent eines Metallkations handeln, beispielsweise um ein Äquivalent Alkali- oder Erdalkalimetallkationen.

Vorzugsweise bedeutet $R_1$ Wasserstoff oder einen gesättigten, geradkettigen oder verzweigten, von Fluoratomen freien Alkylrest mit 1 bis 4 C-Atomen. Besonders bevorzugt bedeutet $R_1$ Wasserstoff, Methyl, Ethyl oder Propyl.

Vorzugsweise bedeutet $R_F$ einen gesättigten, geradkettigen oder verzweigten, fluorierten Alkylrest mit 1 bis 4 C-Atomen und 1 bis 4 F-Atomen. Besonders bevorzugt enthält $R_F$ eine endständige $CF_3$-Gruppe und keine weiteren Substituenten an der Alkylkette, wobei Trifluormethyl, Trifluorethyl, Trifluorpropyl, Trifluorisopropyl und Trifluorbutyl ganz besonders bevorzugt sind.

Vorzugsweise steht $M^{\oplus}$ für ein Äquivalent Natrium-, Kalium- oder Calciumionen.

Besonders bevorzugte Alkylamidosulfonate der Formel (I) sind:

$CF_3-CH_2-NH-SO_3Na$, 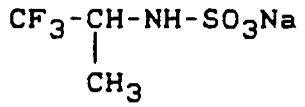, $CF_3-CH_2-CH_2-NH-SO_3Na$,

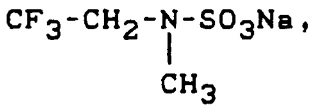, 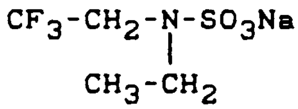

und die entsprechenden Kaliumsalze.

Besonders bevorzugt ist

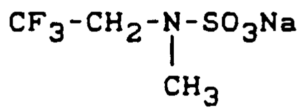

und das entsprechende Kaliumsalz.

Es wurde weiterhin ein Verfahren zur Herstellung von fluorierten Alkylamidosulfonaten der Formel (I)

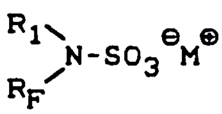 (I),

in der

$R_1$ für Wasserstoff, Alkyl oder fluoriertes Alkyl,

$R_F$ für fluoriertes Alkyl und

$M^{\oplus}$ für eine Äquivalent eines Kations steht.

gefunden, das dadurch gekennzeichnet ist, daß man fluorierte Alkylamidosulfochloride der Formel (II)

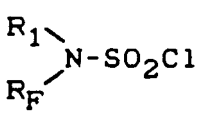 (II),

in der

$R_1$ und $R_F$ die bei Formel (I) angegebenen Bedeutungen haben,

wäßrig-alkalisch verseift.

Von den in das erfindungsgemäße Verfahren einzusetzenden fluorierten Alkylamidosulfonsäurechloriden der Formel (II) können beispielsweise, bevorzugt und besonders bevorzugt solche verwendet werden, bei denen $R_1$ und $R_F$ die weiter oben als beispielhaft, bevorzugt und besonders bevorzugt angegebenen Bedeutungen haben. Fluorierte Alkylamidosulfonsäurechloride der Formel (II) können beispielsweise gemäß der in der DE-OS 3 429 048 beschriebenen Arbeitsweise erhalten werden.

Als Temperaturen für die erfindungsgemäße Verseifung kommen beispielsweise solche im Bereich von -20 bis +100 °C in Frage. Bevorzugt sind Temperaturen im Bereich von -10 bis +80 °C, besonders bevorzugt solche im Bereich 0 bis +50 °C.

Prinzipiell kann das erfindungsgemäße Verfahren auch bei erniedrigtem oder erhöhtem Druck durchgeführt werden, üblicherweise arbeitet man jedoch bei Normaldruck.

Die erfindungsgemäße Verseifungsreaktion kann mit verschiedenen Mengen an Alkali durchgeführt werden. Da stöchiometrisch für die Verseifung eines Mols fluoriertes Alkylamidosulfochlorid der Formel (II) 2 Äquivalente Alkali erforderlich sind, setzt man vorzugsweise mindestens 2 Äquivalente Alkali pro Mol fluoriertes Alkylamidosulfochlorid der Formel (II) ein. Größere Überschüsse an Alkali schaden im allgemeinen nicht, verursachen jedoch Kosten. Besonders bevorzugt ist deshalb der Einsatz von 2 bis 4, ganz besonders bevorzugt der Einsatz von 2,05 bis 3 Äquivalenten Alkali pro Mol fluoriertes Alkylamidosulfochlorid der Formel (II).

Geeignete Alkalien sind beispielsweise die Hydroxide der Alkali- und Erdalkalimetalle, insbesondere Natrium-, Kalium- und Calciumhydroxid.

Die erfindungsgemäße Verseifungsreaktion wird in Gegenwart von Wasser durchgeführt. Die Wassermenge kann in weiten Grenzen variiert werden, beispielsweise im Bereich von 0,4 bis 5 kg, bezogen auf ein Mol zu verseifendes fluoriertes Alkylamidosulfochlorid der Formel (II). Im einfachsten Fall setzt man das Alkali in Form einer wäßrigen Lösung ein, deren Konzentration man so wählt, daß die gewünschten Mengen Alkali und Wasser vorliegen. Zusätzlich zu Wasser können auch inerte organische Lösungsmittel verhanden sein, beispielsweise Alkohole. Diese können jedoch dazu führen, daß nicht mehr in homogener Phase gearbeitet werden kann und/oder bei der Aufarbeitung des Reaktionsgemisches und der Entsorgung der Reaktionsabwässer zusätzlicher Aufwand entsteht. Bevorzugt sind deshalb keine oder nur geringe Mengen organischer Lösungsmittel vorhanden.

Das Zusammenfügen der Reaktanden, im einfachsten Fall wäßriges Alkali und die jeweilige Verbindung der Formel (II), kann in beliebiger Reihenfolge stattfinden. Beispielsweise kann man so verfahren, daß man die Verbindung der Formel (II) zu vorgelegter wäßriger Alkalilösung zutropft, gegebenenfalls nach Beendigung der Zugabe 2 bis 60 Minuten bei Reaktionstemperatur nachrührt und dann das Produkt der Formel (I) isoliert.

Die Aufarbeitung des nach der Reaktion vorliegenden Gemisches kann auf einfache Weise erfolgen. Man kann beispielsweise die wäßrige Rohlösung soweit einengen, daß das Produkt der Formel (I) ausfällt und das als Nebenprodukt gebildete Chlorid des eingesetzten Alkalis noch in Lösung bleibt. Nach der Abtrennung des so ausgefällten Materials erhält man im allgemeinen durch Nachwaschen mit wenig Wasser und Trocknen das Produkt der Formel (I) in analysenreiner Form. Aus der Mutterlauge kann man durch weiteres Einengen und analoge Aufarbeitung weitere Fraktionen des Produktes der Formel (I) erhalten.

Mit dem erfindungsgemäßen Verfahren gelingt es im allgemeinen, fluorierte Alkylamidosulfonate in Ausbeuten von über 70 %, häufig in Ausbeuten von über 90 %, herzustellen, insbesondere wenn man mindestens 2 Produktfraktionen aus der rohen wäßrigen Reaktionslösung durch die zuvor beschriebenen Maßnahmen abtrennt. Dies ist im Hinblick auf den eingangs geschilderten Stand der Technik außerordentlich überraschend.

Die neuen fluorierten Alkylamidosulfonate der Formel (I) können z.B. als Zwischenprodukte zur Herstellung von Pflanzenschutzmitteln, Pharmazeutika und Farbstoffen verwendet werden. Die vorliegende Erfindung betrifft weiterhin die Verwendung von fluorierten Alkylamidosulfonaten der Formel (I)

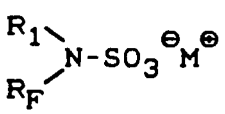

(I),

in der

$R_1$ für Wasserstoff, Alkyl oder fluoriertes Alkyl,
$R_F$ für fluoriertes Alkyl und
$M^{\oplus}$ für ein Äquivalent eines Kations stehen,

als Flammschutzmittel für Polycarbonatformmassen.

Für diese Verwendung sind diejenigen Verbindungen der Formel (I) bevorzugt, besonders bevorzugt und ganz besonders bevorzugt, die weiter oben der Beschreibung der neuen fluorierten Alkylaminosulfonate der Formel (I) entsprechend charakterisiert wurden.

Erfindungsgemäße Polycarbonatformmassen können fluorierte Alkylamidosulfonate der Formel (I) beispielsweise in Mengen von 0,05 bis 1 Gew.-%, vorzugsweise in Mengen von 0,1 bis 0,5 Gew.-%, bezogen auf das Gewicht von Polycarbonat + Flammschutzmitteln enthalten. Außerdem können erfindungsgemäße Polycarbonatformmassen übliche Additive in üblichen Mengen enthalten, beispielsweise Thermo-, Hydrolyse- und/oder UV-Stabilisatoren, Schlagzähmodifikatoren und/oder Entformungsmittel.

Als Polycarbonatbestandteil der erfindungsgemäßen Polycarbonatformassen kommen beispielsweise an sich bekannte aromatische Polycarbonate in Frage. wie sie z.B. durch Polykondensation von Diphenolen mit Phosgen oder Diestern der Kohlensäure erhältlich sind. Bei den Diphenolen kann es sich um unsubstituierte Dihydroxydiarylalkane handeln, aber auch um solche, deren Arylreste substituierte sind, beispielswesie durch $C_1$-$C_4$-Alkylgruppen, z.B. Methylgruppen, und/oder durch Halogenatome, beispielsweise Chloratome, jeweils in o- und/oder m-Stellung zur Hydroxylgruppe.

Insbesondere kommen folgende Diphenole in Frage: Hydrochinon, Resorcin, 4,4'-Dihydroxydiphenyl, Bis-(hydroxy-phenyl)-alkane wie $C_1$ - bis $C_8$-Alkylen- und $C_2$- bis $C_8$-Alkyliden-bisphenole, Bis-(hydroxy-phenyl)-cycloalkane wie $C_5$- bis $C_{15}$-Cycloalkylen- oder $C_5$ - bis $C_{15}$-Cycloalkylidenbisphenole, Bis-(hydroxy-phenol)-sulfide, -ether, -ketone, -sulfoxide oder -sulfone. Ferner $\alpha,\alpha'$ -Bis-(hydroxy-phenyl)-diisopropylbenzol und die entsprechenden kernalkylierten und/oder kernhalogenierten Verbindungen.

Bevorzugt sind Polycarbonate auf der Basis von Bis-(4-hydroxy-phenyl)-propan-2,2 (Bisphenol A), Bis-(4-hydroxy-3,5-dichlor-phenyl)-propan-2,2 (Tetrachlorbisphenol A), Bis-(4-hydroxy-3,5-dibrom-phenyl)-propan-2,2 (Tetrabrombisphenol A), Bis-(4-hydroxy-3,5-dimethyl-phenyl)-propan-2,2 (Tetramethylbisphenol A), Bis-(4-hydroxy-phenyl)-cyclohexan-1,1 (Bisphenol Z) und solche auf der Basis von Dreikernbisphenolen wie $\alpha,\alpha'$-Bis-(4-hydroxy-phenyl)-p-diisopropylbenzol. Weitere geeignete Diphenole sind in den US-Patenten 2 970 131, 2 991 273, 2 999 835, 2 999 846, 3 028 365, 3 062 791, 3 148 172, 3 271 367 und 3 275 601 beschrieben.

Auch verzweigte Polycarbonate sind als Basis für erfindungsgemäße Polycarbonatformmassen geeignet.

Die Polycarbonate können beispielsweise Gewichtsmittel-Molekulargewichte $\overline{M}_w$ im Bereich 10 000 bis 100 000 aufweisen (ermittelt durch Messung der relativen Viskosität in Methylenchlorid bei 25° C). Vorzugsweise liegt dieses Gewichtsmittel-Molekulargewicht im Bereich 15 000 bis 40 000. Als Molekulargewichtsregler kommen beispielsweise monofunktionelle Phenole, wie Phenol, p-tert.-Butylphenol und/oder p-Isooctylphenol in Frage.

Erfindungsgemäße Polycarbonatformmassen kann man beispielsweise durch Compoundierung von Polycarbonat mit 0,05 bis 1 Gew.-% fluorierten Alkylamidosulfonaten der Formel (I) und gegebenenfalls weiteren Additiven auf einem Extruder bei 250 bis 300° C herstellen.

Die erfindungsgemäßen Polycarbonatformmassen zeichnen sich dadurch aus, daß der Verbrennungstest gemäß Underwriters' Laboratories Inc., Bulletin 94, eine Einordnung in die Klasse VO ergibt (Einzelheiten siehe Beispiele 11 und 12).

Die folgenden Beispiele erläutern die vorliegende Erfindung ohne sie in irgendeiner Weise zu Beschränken.

## Beispiele

### Beispiele 1 bis 10

Der Nachweis der gemäß den Beispielen 1 bis 10 hergestellen Produkte erfolgte durch Elementaranalyse und durch ihre IR- und Massenspektren. Letztere wurden nach der FAB-Technik (fast-atomic-bombardement) aufgenommen.

### Beispiel 1

Zu 20 g Natriumhydroxid wurden in 350 ml Wasser gelöst und bei Raumtemperatur unter Kühlung mit Wasser in 15 Minuten 35,8 g (0,2 Mol) 2,2,2-Trifluormethylamidosulfochlorid zugetropft. Anschließend wurde 15 Minuten bei 40° C nachgerührt und dann die Lösung im Wasserstrahlvakuum auf ein Fünftel des ursprünglichen Volumens eingeengt. Der ausgefallene Niederschlag wurde abgesaugt, mit wenig Wasser gewaschen und getrocknet. Es wurden 30,4 g (75,6 % der Theorie) Natrium-N-(2,2,2-trifluorethyl)-aminosulfonat in Form farbloser Kristalle und mit einem Schmelzpunkt von über 250° C erhalten.

Aus dem Filtrat, das mit der Waschphase vereinigt wurde, wurden durch weiteres Einengen, Absaugen, Nachwaschen mit Wasser und Trocknen weitere 6,1 g (15,1 % der Theorie) Natrium-N-(2,2,2-trifluorethyl)-amidosulfonat erhalten.

Die Gesamtausbeute betrug also 36,5 g (90,7 % der Theorie).

Beispiel 2

Es wurde verfahren wie in Beispiel 1, jedoch wurde die entsprechende Menge 2,2,2-Trifluor-1-methyl-ethyl-amidosulfonat eingesetzt. Die Gesamtausbeute an Natrium-N-(2,2,2-trifluor-1-methyl-ethyl)-amidosulfonat mit einem Schmelzpunkt von über 250 ° C betrug 80,2% der Theorie.

Beispiel 3

Es wurde verfahren wie in Beispiel 1, jedoch wurde die entsprechende Menge 3,3,3-Trifluorpropylamidosulfochlorid eingesetzt und Natrium-N-(3,3,3-trifluorpropyl)-amidosulfonat mit einem Schmelzpunkt von über 250 ° C in einer Gesamtausbeute von 93,6 % der Theorie erhalten.

Beispiel 4

Es wurde verfahren wie in Beispiel 1, jedoch wurde die entsprechende Menge 2,2,2-Trifluorethyl-N-methyl-amidosulfonat eingesetzt und Natrium-N-(2,2,2-trifluorethyl)-N-methyl-amidosulfonat mit einem Schmelzpunkt von über 250 ° C in einer Gesamtausbeute von 97,8 % der Theorie erhalten.

Beispiel 5

Es wurde verfahren wie in Beispiel 1, jedoch wurde die entsprechende Menge 2,2,2-Trifluorethyl-N-ethyl-amidosulfochlorid eingesetzt und Natrium-N-(2,2,2-trifluorethyl)-N-ethyl-amidosulfonat mit einem Schmelzpunkt von über 250 ° C in einer Gesamtausbeute von 78,1 % der Theorie erhalten.

Beispiele 6 bis 10

Es wurde jeweils verfahren wie in den Beispielen 1 bis 5, jedoch wurde anstelle von 20 g Natriumhydroxid jeweils 27,5 g Kaliumhydroxid eingesetzt. Es wurden erhalten:

Beispiel 6

Kalium-N-(2,2,2-trifluorethyl)-amidosulfonat mit einem Schmelzpunkt von 245 ° C (Zersetzung) in einer Gesamtausbeute von 96,8 % der Theorie.

Beispiel 7

Kalium-N-(2,2,2-trifluor-1-methyl-ethyl)-amidosulfonat mit einem Schmelzpunkt von über 250 ° C in einer Gesamtausbeute von 78,4 % der Theorie.

Beispiel 8

Kalium-N-(3,3,3-trifluorpropyl)-amidosulfonat mit einem Schmelzpunkt von über 250 ° C in einer Gesamtausbeute von 96,3 % der Theorie.

Beispiel 9

Kalium-N-(2,2,2-trifluorethyl)-N-methyl-amidosulfonat mit einem Schmelzpunkt von über 250 ° C in einer Gesamtausbeute von 89,1 % der Theorie.

Beispiel 10

Kalium-N-(2,2,2-trifluorethyl)-N-ethyl-amidosulfonat mit einem Schmelzpunkt von über 250 ° C in einer Gesamtausbeute von 84,8 % der Theorie.

Beispiele 11 und 12

Verbrennungstests

Gemäß dem UL 94-Test (Underwriters' Laboratories, Inc., Bulletin 94) wurden Polycarbonatproben zu Stäben der Abmessungen 127 x 12,7 x 3,2 mm geformt. Die Stäbe wurden vertikal so montiert, daß die Unterseite der Probenkörper sich 305 mm über einem Streifen Verbandstoff befanden. Jeder Probestab wurde einzeln mittels zwei aufeinanderfolgender Zündvorgänge von 10 Sekunden Dauer gezündet, die Brenneigenschaften nach jedem Zündvorgang wurde beobachtet und danach die Probe bewertet. Zum Entzünden der Probe wurde ein Bunsenbrenner mit einer 10 mm hohen blauen Flamme von Erdgas mit einem Wärmeinhalt von $3{,}73 \times 10^4$ $KJ/m^3$ benutzt.

Für eine Klassifizierung in die Klasse UL 94 VO ist es erforderlich, daß keine der Proben länger als 10 Sekunden nach jeder Einwirkung der Testflamme brennt, keine Gesamt-Flammzeit von mehr als 50 Sekunden bei der zweimaligen Flammeinwirkung auf jeden Probensatz auftritt, keine der Proben vollständig bis hinaus zu der am oberen Ende der Probe befestigten Halteklammer abbrennt, keine der Proben den Verbandstoff durch brennende Tropfen oder Teilchen entzündet, und die Proben nicht länger als 30 Sekunden nach Entfernen der Testflamme glimmen.

Andere UL 94-Klassifizierungen bezeichnen Proben, die weniger flammwidrig und selbstverlöschend sind (UL 94 V1) und flammende Tropfen oder Teilchen abgeben (UL 94 V2).

Beispiel 11

9000 g Bisphenol A-Homopolycarbonat der relativen Viskosität 1,29, gemessen in Methylenchlorid bei 25 °C, wurden bei 300 °C über einen Extruder zu einem Strang extrudiert und anschließend granuliert. Aus dem Granulat wurden auf einer Spritzgußmaschine bei 280 °C Prüfkörper mit den Maßen 127 x 12,7 x 3,2 mm (gemäß UL 94-Test) geformt, an denen der zuvor beschriebene UL 94-Test vorgenommen wurde. Es ergab sich die Klassifizierung UL 94 V2 (3,2 mm).

Beispiel 12

40 g 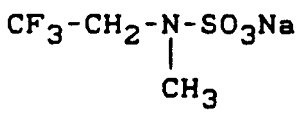 (0,4 Gew.-%)

wurden zu 8960 g des in Beispiel 11 beschriebenen Bisphenol A-Homopolycarbonats zugegeben. Das Ganze wurde über einen Extruder bei 300 °C zu einem Strang extrudiert und anschließend granuliert. Aus dem Granulat wurden auf einer Spritzgußmaschine bei 280 °C Prüfkörper mit den Maßen 127 x 12,7 x 3,2 mm (gemäß UL 94-Test) geformt, an denen der UL 94-Test vorgenommen wurde. Es ergab sich die Klassifizierung UL 94 VO (3,2 mm).

**Patentansprüche**

**1.** Fluorierte Alkylamidosulfonate der Formel (I)

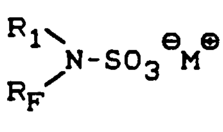 (I),

in der

$R_1$ für Wasserstoff, Alkyl oder fluoriertes Alkyl,
$R_F$ für fluoriertes Alkyl und
$M^{\oplus}$ für ein Äquivalent eines Kations steht.

2. Fluorierte Alkylamidosulfonate gemäß Anspruch 1, dadurch gekennzeichnet, daß $R_1$ für einen Alkylrest mit 1 bis 12 C-Atomen steht, der gegebenenfalls mit 1 bis 8 F-Atomen substituiert ist und $R_F$ für einen fluorierten Alkylrest mit 1 bis 12 C-Atomen und 1 bis 8 F-Atomen steht.

3. Fluorierte Alkylamidosulfonate gemäß Ansprüchen 1 und 2, dadurch gekennzeichnet, daß $M^{\oplus}$ für ein Äquivalent Alkali- oder Erdalkalimetallkationen steht.

4. Fluorierte Alkylamidosulfonate der Formeln

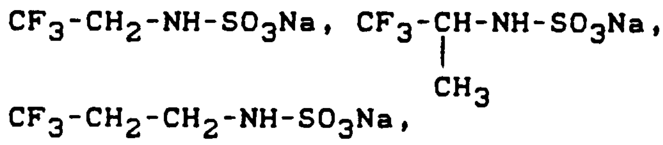

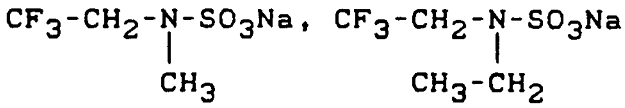

und die entsprechenden Kaliumsalze.

5. Verfahren zur Herstellung von fluorierten Alkylamidosulfonaten der Formel (I)

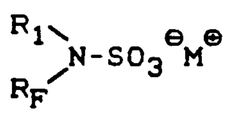 (I),

in der
$R_1$ für Wasserstoff, Alkyl oder fluoriertes Alkyl,
$R_F$ für fluoriertes Alkyl und
$M^{\oplus}$ für ein Äquivalent eines Kations steht,
dadurch gekennzeichnet, daß man fluorierte Alkylamidosulfochloride der Formel (II)

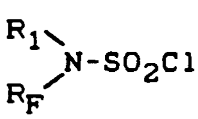 (II),

in der
$R_1$ und $R_F$ die bei Formel (I) angegebenen Bedeutungen haben,
wäßrig-alkalisch verseift.

6. Verfahren nach Anspruch 5, dadurch gekennzeichnet, daß man es bei Temperaturen im Bereich von -5 bis +100 °C durchführt.

7. Verfahren nach Ansprüchen 5 und 6, dadurch gekennzeichnet, daß man 2 bis 4 Äquivalente Alkali proMol fluoriertes Alkylamidosulfochlorid der Formel (II) einsetzt.

8. Verfahren nach Ansprüchen 5 bis 7, dadurch gekennzeichnet, daß man wäßrige Lösungen von Natrium-, Kalium- oder Calciumhydroxid einsetzt.

**9.** Verwendung von fluorierten Alkylamidosulfonaten der Formel (I)

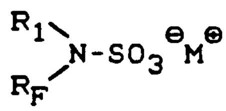 (I),

in der
- $R_1$ für Wasserstoff, Alkyl oder fluoriertes Alkyl,
- $R_F$ für fluoriertes Alkyl und
- $M^{\oplus}$ für ein Äquivalent eines Kations steht,

als Flammschutzmittel für Polycarbonatformmassen.

**10.** Polycarbonatformmassen, die fluorierte Alkylamidosulfonate der Formel (I)

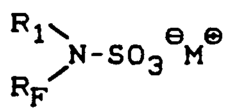 (I),

in der
- $R_1$ für Wasserstoff, Alkyl oder fluoriertes Alkyl,
- $R_F$ für fluoriertes Alkyl und
- $M^{\oplus}$ für ein Äquivalent eines Kations steht,

enthalten.

## Claims

**1.** A fluorinated alkylamidosulphonate of formula (I)

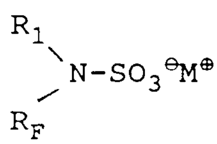 (I)

in which
- $R_1$ represents hydrogen, an alkyl radical or a fluorinated alkyl radical,
- $R_F$ represents a fluorinated alkyl radical, and
- $M^{\oplus}$ represents one equivalent of a cation.

**2.** A fluorinated alkylamidosulphonate according to Claim 1, characterised in that $R_1$ represents an alkyl radical with 1 to 12 C atoms which has 1 to 8 substituent F atoms if applicable, and $R_F$ represents a fluorinated alkyl radical with 1 to 12 C atoms and 1 to 8 F atoms.

**3.** A fluorinated alkylamidosulphonate according to Claims 1 and 2, characterised in that $M^{\oplus}$ represents one equivalent of alkali or alkaline earth cations.

4. Fluorinated alkylamidosulphonates corresponding to formulae

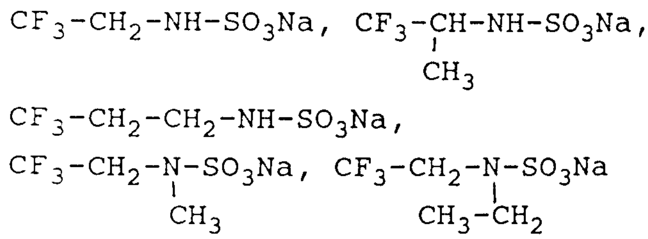

and the corresponding calcium salts.

5. A process for the preparation of fluorinated alkylamidosulphonates of formula (I)

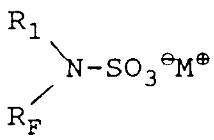 (I)

in which
$R_1$ represents hydrogen, an alkyl radical or a fluorinated alkyl radical,
$R_F$ represents a fluorinated alkyl radical, and
$M^{\oplus}$ represents one equivalent of a cation,
characterised in that fluorinated alkylamidothiochlorides of formula (II)

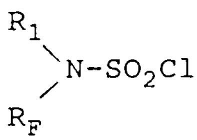 (II),

in which
$R_1$ and $R_F$, having the same meaning as in formula (I), are saponified in aqueous alkali.

6. A process according to Claim 5, characterised in that it is carried out at temperatures in the range from -5 to +100 °C.

7. A process according to Claims 5 and 6, characterised in that 2 to 4 equivalents of alkali are used per mole of fluorinated alkylamidothiochloride of formula (II).

8. A process according to Claims 5 to 7, characterised in that aqueous solutions of sodium-, potassium- or calcium hydroxides are used.

9. The use of fluorinated alkylamidosulphonates of formula (I)

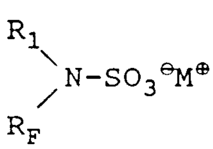 (I)

in which

$R_1$ represents hydrogen, an alkyl radical or a fluorinated alkyl radical,
$R_F$ represents a fluorinated alkyl radical, and
$M^{\oplus}$ represents one equivalent of a cation,

as flame-retardants for polycarbonate moulding materials.

**10.** Polycarbonate moulding materials which contain fluorinated alkylamidosulphonates of formula (I)

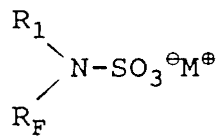 (I)

in which

$R_1$ represents hydrogen, an alkyl radical or a fluorinated alkyl radical,
$R_F$ represents a fluorinated alkyl radical, and
$M^{\oplus}$ represents one equivalent of a cation.

## Revendications

**1.** Alkylamidosulfonates fluorés de formule I

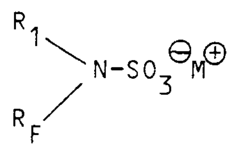 (I)

dans laquelle

$R_1$ représente l'hydrogène, un groupe alkyle ou alkyle fluoré,
$R_F$ représente un groupe alkyle fluoré et
$M^{\oplus}$ représente un équivalent d'un cation.

**2.** Alkylamidosulfonates fluorés selon la revendication 1, caractérisés en ce que $R_1$ représente un groupe alkyle en $C_1$-$C_{12}$ éventuellement substitué par 1 à 8 atomes de F, et $R_F$ représente un groupe alkyle fluoré contenant 1 à 12 atomes de carbone et 1 à 8 atomes de F.

**3.** Alkylamidosulfonates fluorés selon les revendications 1 et 2, caractérisés en ce que $M^{\oplus}$ représente un équivalent d'un cation de métal alcalin ou alcalino-terreux.

**4.** Alkylamidosulfonates fluorés de formules

$CF_3-CH_2-NH-SO_3Na$, 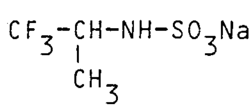, $CF_3-CH_2-CH_2-NH-SO_3Na$,

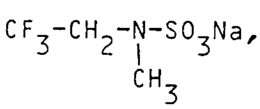, 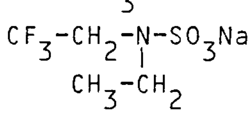

et les sels de potassium correspondants.

**5.** Procédé de préparation des alkylamidosulfonates fluorés de formule I

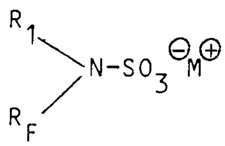

(I)

dans laquelle

$R_1$ représente l'hydrogène, un groupe alkyle ou alkyle fluoré,

$R_F$ représente un groupe alkyle fluoré et

$M^{\oplus}$ représente l'équivalent d'un cation,

caractérisé en ce que l'on soumet des alkylamidosulfochlorures fluorés de formule II

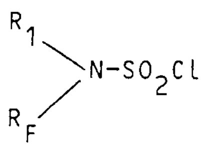

(II)

dans laquelle

$R_1$ et $R_F$ ont les significations indiquées en référence à la formule 1, à saponification en milieu aqueux alcalin.

**6.** Procédé selon la revendication 5, caractérisé en ce que l'on opère à des températures dans l'intervalle de -5 à +100°C.

**7.** Procédé selon les revendications 5 et 6, caractérisé en ce que l'on utilise de 2 à 4 équivalents d'alcali par mole de l'alkylamidosulfochlorure fluoré de formule II.

**8.** Procédé selon les revendications 5 à 7, caractérisé en ce que l'on utilise des solutions aqueuses d'hydroxyde de sodium, de potassium ou de calcium.

**9.** Utilisation des alkylamidosulfonates fluorés de formule I

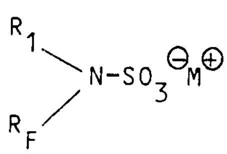

(I)

dans laquelle

$R_1$ représente l'hydrogène, un groupe alkyle ou alkyle fluoré,

$R_F$ représente un groupe alkyle fluoré et

$M^{\oplus}$ représente un équivalent d'un cation,

en tant qu'agents ignifugeants pour des matières à mouler en polycarbonates.

**10.** Matière à mouler en polycarbonates, contenant des alkylamidosulfonates fluorés de formule I

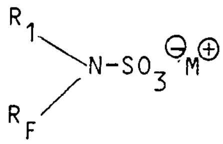

(I)

dans laquelle

$R_1$ représente l'hydrogène, un groupe alkyle ou alkyle fluoré,

$R_F$ représente un groupe alkyle fluoré et

$M^{\oplus}$ représente un équivalent d'un cation.